# EUROPÄISCHE PATENTSCHRIFT

(11) **EP 0 429 704 B1**
(45) Veröffentlichungstag und Bekanntmachung des Hinweises auf die Patenterteilung: **16.03.1994**
(21) Anmeldenummer: 89121996.6
(22) Anmeldetag: 29.11.1989
(51) Int. Cl.: G21C 3/322

(54) **Brennelement mit Filmabstreifer für einen Siedewasserreaktor**
Fuel assembly with flow trippers for a boiling water reactor
Assemblage combustible avec déclencheurs d'écoulement pour un réacteur à eau bouillante

(43) Veröffentlichungstag der Anmeldung: 05.06.1991
(73) Patentinhaber: SIEMENS AKTIENGESELLSCHAFT, 80333 München (DE)
(72) Erfinder: Lippert, Hans-Joachim, Ing. grad., D-8552 Hoechstadt (DE); Kraemer, Wendelin, Dr.-Ing., D-6000 Frankfurt 70 (DE)

(56) Entgegenhaltungen:
- DE-U- 8 802 565
- GB-A- 2 208 749
- US-A- 4 749 543
- US-A- 4 775 510

## Beschreibung

Die Erfindung betrifft ein Brennelement mit Filmabstreifer für einen Siedewasserreaktor mit den im Oberbegriff des Anspruchs 1 angeführten Merkmale.

Bei der Auslegung eines Brennelementes sind verschiedene, einander teilweise wiedersprechende Bedingungen zu berücksichtigen, um die Erzeugung und den Fluß termischer Neutronen zu optimieren, die Dampferzeugung an den aktiven Brennstäben zu steigern, dabei eine ausreichende mechanische Stabilität und Korrosionsfestigkeit zu gewährleisten und andere Einflüsse (z.B. Korrosion oder termische Veränderungen) auszuschalten.

Die den Kernbrennstoff, z.B. Urandioxyd oder Uran-Plutonium-Mischoxyde enthaltenden Brennstäbe sind von mechanischen Aufbauten gehalten, die gleichzeitig auch die Führung des Wasser- und Dampfstromes übernehmen und das sogenannte Skelett der Brennelemente bilden. Die Brennstäbe sind dabei in Längsrichtung parallel zueinander im Inneren eines Brennelementkastens angeordnet, der sich in Längsrichtung zwischen einem Fußteil und einem Kopfteil erstreckt und von Wasser durchströmt wird, das durch Öffnungen des Fußteiles eintritt, unter teilweiser Verdampfung entlang der Brennstäbe strömt, an den heißen Staboberflächen weitgehend verdampft und als Wasser/Dampf-Gemisch durch Austrittsöffnungen des Kopfteils austritt.

Um an den Brennstäben einen hohen Wärmeübergang mit einer hohen Siedeleistung bei möglichst gleichmäßiger Kühlung zu erreichen, wird entlang der Längsachse des Kastens ein eine Strömung mit einem Druckunterschied aufrecht erhalten, wozu in dem von den Austrittsöffnungen über die Dampfturbine zu den Eintrittsöffnungen des Kastens führenden, geschlossenen Wasserkreislauf entsprechende Fördereinrichtungen vorgesehen sind. Außerhalb des Kastens befindet sich nicht-siedendes Wasser zum Abbremsen der Neutronen und ein steuerbarer Absorber zur Steuerung der Neutronenbilanz. Um innerhalb der aktiven Zone des Reaktors die Neutronenabsorption gering zu halten, ist dort für die Skeletteile und insbesondere für den Brennelementkasten ein spezielles Material, in der Regel eine Zirkoniumlegierung, verwendet, die aber eine geringe mechanische Festigkeit aufweist. Der Druckunterschied zwischen dem Kasteninneren und dem Äußeren kann daher den Kasten leicht ausbeulen.

Zur Verbesserung des Neutronenflusses werden häufig einige der für die Brennstäbe vorgesehenen Positionen im Kasteninneren durch sogenannte "Wasserstäbe" ersetzt, d.h. Kanäle in der Form von Brennstäben, die aber nicht-siedendes Wasser führen. Es ist bei einem Kasten mit quadratischem Querschnitt auch schon vorgeschlagen worden (deutsches Gebrauchsmuster DE-U-88 02 565.9) einen Wasserkanal zu verwenden, dessen Querschnitt die Form eines regelmäßigen Polygons, insbesondere eines Quadrats aufweist. Die Wasserkanäle sind also durch im Inneren des Kastens parallel zu den Brennstäben verlaufende Innenwände seitlich gegenüber den Brennstäben abgeschlossen. Dabei kann es vorteilhaft sein, im Zwischenraum zwischen diesen Kanälen und den Kastenwänden Strömungsleitflächen anzuordnen, die eine gleichmäßige Strömung und eine Verwirbelung von Dampfblasen und Flüssigkeitströpfchen bewirken sollen, um die Brennstäbe gleichmäßig mit Wasser zu beaufschlagen. Diese Strömungsleitflächen können insbesondere an gitterförmigen Strukturen angebracht sein, die als Abstandhalter für die Brennstäbe dienen.

In der nicht-vorveröffentlichten europäischen Patentanmeldung 89 119 176.9 ist vorgeschlagen, zur Erhöhung der mechanischen Stabilität Innenwände im Kasten vorzusehen, die gegenüberliegende Kastenwände miteinander verbinden. Dabei ist es vorteilhaft, wenn diese Innenwände zusammen mit den Abstandhaltern, den Brennstäben und entsprechenden Befestigungselementen für die Brennstäbe im Kopfteil und Fußteil als ein Bauteil ausgeführt ist, das gegenüber der Kastenwand verschiebbar ist, sodaß der Kasten bei Inspektionen vom Brennelement abgezogen werden kann.

Um die verschiedenen Anforderungen an ein Brennelement zu optimieren, ist in der US-Patentschrift 4 749 543 für die Außenflächen des Kastens ein Profil vorgeschlagen, das an den Ecken des quadratischen Kastens eine verstärkte Kastenwand und vor allem im unteren Kastenteil Wandverstärkungen bildet, die in Längsrichtung und/oder Querrichtung verlaufen. Dank dieser Verstärkungen reicht dann in den zwischen den Verstärkungen liegenden Bereichen eine relativ geringe Wanddicke aus, so daß insgesamt weniger neutronen-absorbierendes Material für den Kasten erforderlich wird.

Zusätzlich sind an den Innenflächen der Kastenwände senkrecht zur Strömungsrichtung verlaufende Nuten eingefräst. Sie haben einerseits die Aufgabe, als "Filmabstreifer" ("flow tripper") einen an den Innenflächen des Kastens entlangkriechenden Flüssigkeitsfilm abzulösen und in Form von Flüssigkeitströpfchen in den Strom des Siedewassers zu bringen. Im oberen Drittel des Brennelementes, wo wegen der Wasserverdampfung an den heißen Brennstäben der Siedewasserstrom zunehmend aus Wasserdampf und Wassertröpfchen besteht, soll dadurch den Brennstäben ein höherer Anteil an Flüssigwasser zugeführt werden. Andererseits sollen die Nuten durch die Vergrößerung des Strömungsquerschnittes einem durch den Volumenzuwachs beim Verdampfen entstehenden Druck entgegenwirken, wobei aber zur Aufrechterhaltung der mechanischen Stabilität im Bereich der durch die Nuten verringerten Wandstärke die Außenflächen der Kastenwände das erwähnte Profil tragen, das Verstärkungsbereiche mit entsprechend vergrößerter Wanddicke vorsieht.

Aufgabe der Erfindung ist es, ein Brennelement mit verbesserten Filmabstreifern zu schaffen. Diese Filmabstreifer sollen den ungenutzes Kühlmittel transportierenden Flüssigkeitsfilm an den Kastenwänden ablösen und auf die Oberflächen der Brennstäbe leiten. Dadurch wird eine verbesserte Kühlung mit einem günstigeren Wärmeübergang und einer gesteigerten Siedeleistung an den Brennstäben erreicht, wobei aber gleichzeitig die Strömungs- und Druckverhältnisse des Kühlmittels, die mechanische Stabilität und die Verteilung des Neutronenflusses möglichst nicht gestört werden sollen.

Diese Aufgabe wird gelöst durch ein Brennelement der eingangs erwähnten Art, bei dem die Filmabstreifer als in die Strömungsrichtung des Kühlmittels hineinragende, den Strömungsquerschnitt des Kühlmittels geringfügig verkleinernde Wölbungen ausgebildet sind und diese Wölbungen auf ihrer dem Kühlmittelstrom zugewandten Böschung eine zur Strömungsrichtung senkrechte Prallfläche aufweisen.

Bevorzugte Weiterbildungen der Erfindung sind in den Unteransprüchen gekennzeichnet. Anhand von bevorzugten Ausführungsformen und 16 Figuren wird die Erfindung näher erläutert.

Es zeigen:
- Fig. 1: das Prinzip eines Siedewasserreaktors,
- Fig. 2: ein Brennelement für den Siedewasserreaktor,
- die Figuren 4 bis 8: den Querschnitt durch einen Brennelementkasten mit Brennstäben und Innenwänden, die teils nicht-siedendes Wasser führende Wasserkanäle, teils Verstärkungswände für den Brennelementkasten bilden,
- Fig. 9: einen Längsschnitt durch eine Kastenwand, einen Abstandhalter, den Flüssigkeitsfilm an der Kastenwand und den Kühlmittelstrom aus Dampf und Tröpfchen, wobei die Kastenwand keinen Filmabstreifer zeigt,
- Fig. 10: den gleichen Längsschnitt für eine Kastenwand mit Filmabstreifer, wobei der Filmabstreifer gemäß dem Stand der Technik (US-PS 4.749.543) als Nut ausgebildet ist,
- Fig. 11: den gleichen Längsschnitt mit einem Filmabstreifer nach der Erfindung,
- Fig. 12: einen teilweise aufgeschnittenen Brennelementkasten mit einer ersten Ausführungsform des erfindungsgemäßen Filmabstreifers,
- Fig. 13: einen Querschnitt durch die Kastenwand bei einer bevorzugten Ausführungsform der Erfindung, bei der die Wölbungen des Filmabstreifers durch Verformen von Wandteilen konstanter Dicke hergestellt und die Prallflächen durch anschließendes mechanisches Abtragen erzeugt sind,
- Fig. 14: einen anderen vorteilhaften Filmabstreifer, bei dem die Wölbungen durch Aufbringen von Schweißmaterial gebildet und die Prallflächen durch mechanisches Abtragen des Schweißmaterials erzeugt sind,
- Fig. 15: eine weitere vorteilhafte Ausführungsform des Filmabstreifers, der als entsprechendes Formteil aufgesetzt ist, und
- Fig. 16: eine vorteilhafte Ausführungsform, bei dem die Wölbungen als senkrecht aufgesetzte Stege ausgebildet sind.

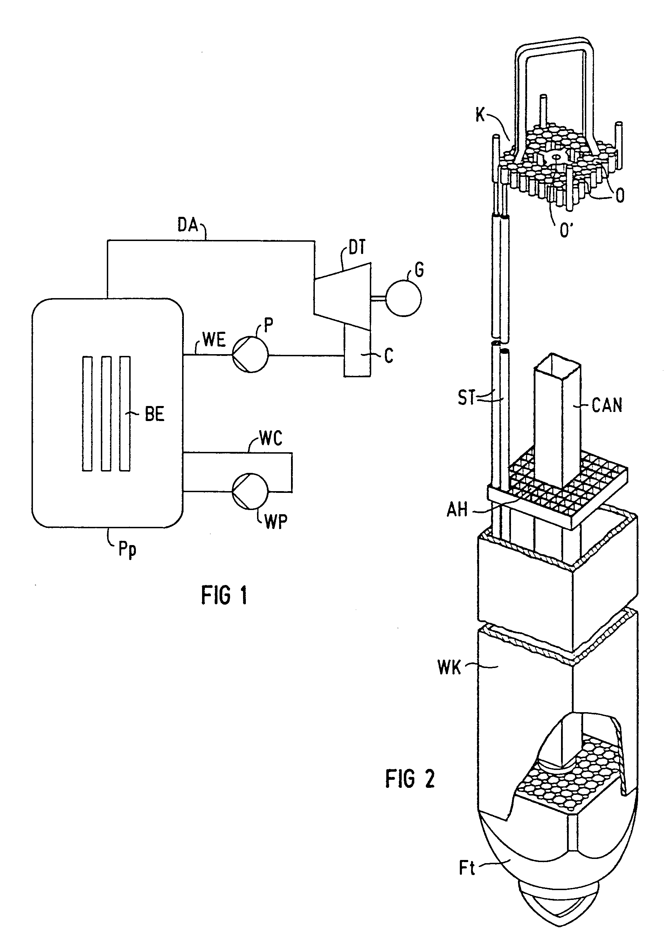

Ein Siedewasserkernreaktor besitzt nach Fig. 1 einen Druckbehälter Pp, indem sich ein Reaktorkern mit vertikal angeordneten Brennelementen BE befindet. Eine Dampf-Austrittsleitung DA führt zu einer Dampfturbine DT, die einen Generator G antreibt. Das in einem Kondensator C kondensierte Wasser wird über eine Speisewasserpumpe P einer Wassereintrittsleitung WE des Druckbehälters zugeführt.

Auch das in den Brennelementen nicht-verdampfte Wasser wird über einen Wasserkreislauf WC und eine Kühlmittelpumpe WP umgepumpt.

Die im Druckbehälter befindlichen Brennelemente BE enthalten vertikal angeordnete Stäbe ST (Fig. 2), die unten in einem Fuß Ft und oben in einem Kopfteil K gehalten und seitlich von einem Wasserkasten WK umgeben sind. Am Kopfteil K sind Austrittsöffnungen 0 für Wasser/Dampf-Gemisch erkennbar, das über weitere nicht-dargestellte Bauteile (z.B. zum Trocknen des Dampfes) in einem geschlossenen Kreislauf an die Dampfturbine DT angeschlossen sind. Entsprechende Eintrittsöffnungen am Fußteil sind nicht sichtbar.

Die Brennstäbe sind im Kasten durch Abstandhalter AH fixiert, die sich in Querrichtung zwischen den Brennstäben erstrecken. Während Fig. 2 nur einen Abstandhalter zeigt, sind normalerweise etwa 5 bis 7 derartige Abstandhalter in annähernd gleichmäßigen Abständen hintereinander im Kasten angeordnet.

Bevorzugt erstreckt sich in Längsrichtung des Kastens ein Wasseskanal CAN für nicht-siedendes Wasser, der über entsprechende Eintrittsöffnungen im Fuß F und eine entsprechende Austrittsöffnung O′ im Kopf K an den Kreislauf der Pumpen P und WP angeschlossen ist.

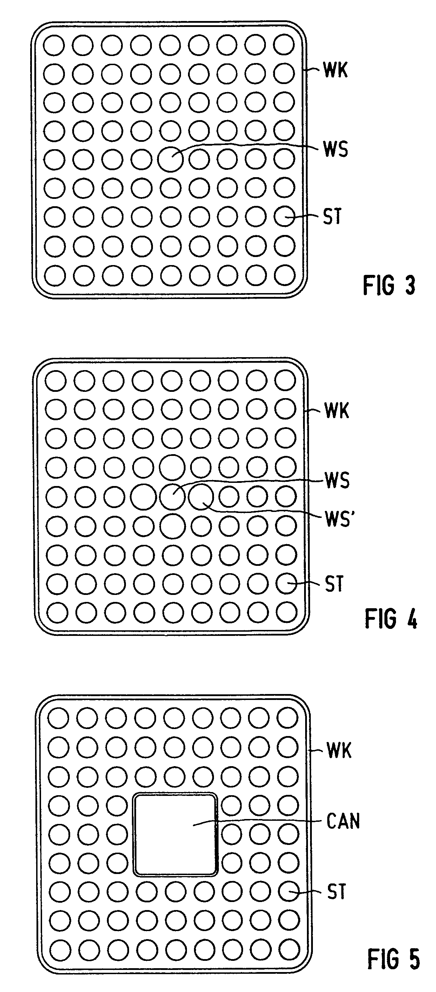

Beim Querschnitt durch den Wasserkasten WK in Fig. 3 sind die Brennelemente in den Maschen eines regelmäßigen, rechtwinkeligen Gitters angeordnet, wobei 9 x 9 Positionen für die Brennstäbe FT entstehen. Im Zentrum des Brennelementes ist aber anstelle eines Brennstabes ein Wasserkanal angeordnet, der in diesem Fall aus einer rohrförmigen Innenwand im Kasten gebildet ist (sogenannter "Wasserstab" WS).

Im Fall der Fig. 4 besitzt der Kasten, für den vorteilhaft ein polygonaler Querschnitt gewählt wird, ebenfalls einen quadratischen Querschnitt. Jedoch sind in diesem Fall mehrere Innenwände mit entsprechenden Wasserstäben WS, WS′ vorgesehen. Hier verbleiben nur 9 x 9 - 5 Positionen für die Brennstäbe ST.

Besonders vorteilhaft hat sich ein Wasserkanal CAN mit dem bereits in Fig. 2 gezeigten, quadratischen Querschnitt erwiesen. Gemäß Fig. 5 können sich dabei 9 x 9 - 9 Brennstäbe ST ergeben.

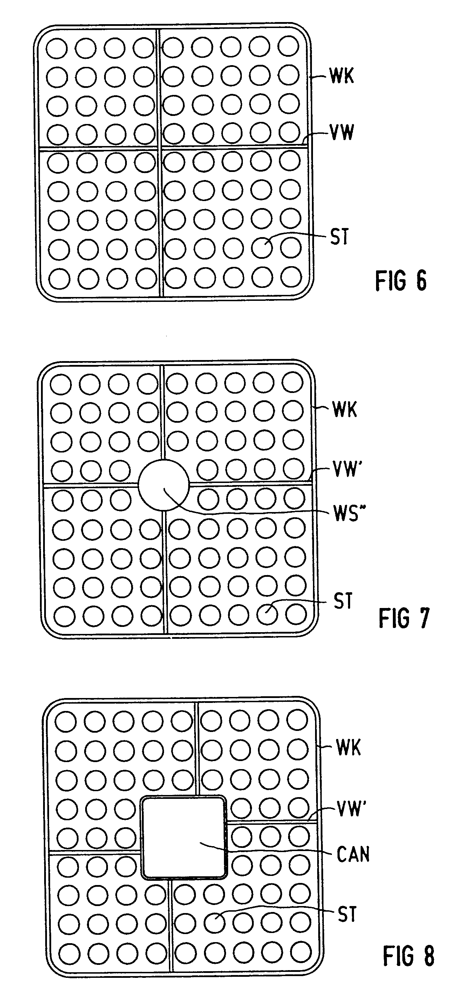

Gemäß Fig. 6 sind bei einer anderen bevorzugten Ausführungsform gegenüberliegende Wände des Kastens durch Innenwände miteinander verbunden, die bei polygonalem Querschnitt jeweils zu Kastenwänden parallel sind. Bei der quadratischen Form der Fig. 6 ergibt sich dabei eine kreuzförmige Struktur der verstärkenden Innenwände VW. Derartige verstärkende Innenwände VW erlauben dem Brennelement trotz verhältnismäßig dünner Kastenwände WK einen hohen Förderdruck für das Wasser, dessen erhöhte Strömungsgeschwindigkeit somit zu einer erhöhten Dampfbildung führen kann. Um Druckunterschiede in den einzelnen Quadranten des Kastens auszugleichen, können an den Verstärkungswänden VW, die sich in Längsrichtung praktisch über die gesamte Kastenlänge erstrecken, Perforationen oder andere Durchlässe vorgesehen sein.

Auch beim Querschnitt nach Fig. 7 sind im Kasteninneren Innenwände vorgesehen, die aber zum Teil einen (hier verhältnismäßig großen) Wasserstab WS˝ bilden, zum Teil als Verstärkungswände VW′ ausgebildet sind, die die gegenüberliegenden Kastenwände über den Wasserstab miteinander verbinden. Im Gegensatz zu den Figuren 3 bis 5 ist der vom Wasserstab WS˝ gebildete Wasserkanal nicht streng zentral im Kasten angeordnet, sondern seitlich etwas verschoben.

Fig. 8 zeigt einen zentralen, von einem Teil der Innenwände gebildeten Wasserkanal CAN, der entsprechend Fig. 7 über einen anderen Teil der Innenwände, die als Verstärkungswände VW′ dienen, mit den Kastenwänden verbunden ist.

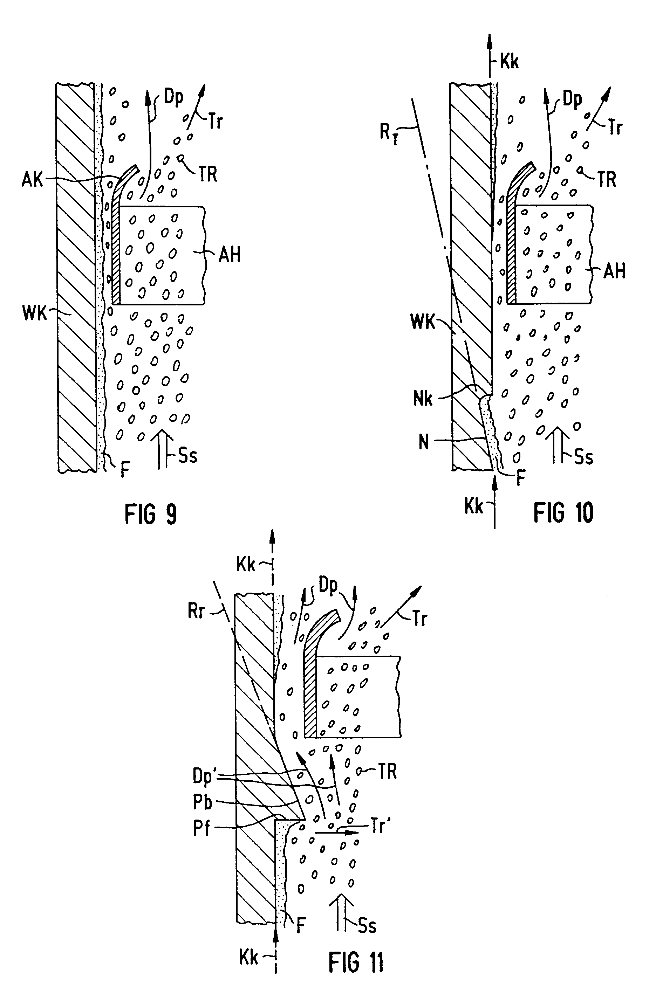

In Fig. 9 ist eine Wand des Brennelementkastens WK im Längsschnitt dargestellt. Der Pfeil SS gibt die Strömungsrichtung an, mit der im unteren Teil des Brennelementes das Wasser und im oberen Teil ein Wasserdampf/Wassertröpfchen-Gemisch an der den Brennstäben zugewandten Seitenfläche der Kastenwand WK entlangströmt. An der Wand WK, die aus dem kühleren unteren Teil des Brennelementes in den oberen, dampfführenden Raum des Brennelementes ragt und durch das nicht-siedende Wassser außerhalb des Brennelementes gekühlt ist, kommt es zu keiner Verdampfung. Vielmehr kriecht dort Wasser in Form eines Filmes F nach oben.

Mit AH ist der Steg eines Abstandhalters bezeichnet, dessen Längsseite eine Kante AK aufweist, die als Strömungsleitfläche ausgebildet ist und derart in den Dampf-Strom ragt, daß die im Strom enthaltenen Tröpfchen TR aus ihrer horizontalen Strömungsrichtung abgelenkt und in die Richtung der Brennelemente geschleudert werden. Dadurch entsteht eine teilweise Trennung der Tröpfchen-Stromes Tr von dem in Richtung des Pfeiles Dp strömenden Wasserdampf und den Brennstäben wird mehr Flüssigwasser zugeführt.

Diese Trennungswirkung wird erhöht, wenn den Abstandshaltern AH bzw. deren zu Leitflächen geformten Kanten AK Filmabstreifer in Strömungsrichtung vorgelagert sind.

In Strömungsrichtung vor und hinter dem Filmabstreifer erstreckt sich das Profil auf der Innenseite der Kastenwände geradlinig in einer zur Strömungsrichtung parallelen Fluchtlinie Kk-Kk. Der Filmabstreifer des Standes der Technik (Fig. 10) ist als Nut N ausgebildet, die in Strömungsrichtung zunächst eine in die Kastenwand hineingearbeitete Rampe mit der Rampen-Fluchtlinie Rr aufweist, den Strömungsquerschnitt vergrößert und in einer zur Strömungsrichtung senkrechten Kante NK endet.

Damit der Flüssigkeitsfilm tatsächlich abreißt und als Tröpfchen vom Kühlmittelstrom Ss mitgenommen wird, muß diese Böschung mit der Fluchtlinie Rr genügend breit sein. Andernfalls würde der Kühlmittelstrom im Bereich des Filmabstreifers praktisch nicht aus seiner normalen Längsrichtung abgelenkt werden. Dann füllen sich im ungünstigsten Fall die Nuten überhaupt nur mit Flüssigkeit, und im günstigsten Fall bilden sich zwar Tröpfchen, die sich aber bald wieder als Film an der Wand niederschlagen, da sie kaum eine in das Kasteninnere, also auf die Brennstäbe gerichtete Geschwindigkeitskomponente erhalten.

Um daher die angestrebte verbesserte Kühlleistung zu erreichen, müssen die Nuten hinreichend breit und hinreichend tief sein, was zwar im Hinblick auf eine Erweiterung des Strömungsquerschnittes und eine Verringerung des Druckabfalls für die Kühlflüssigkeit durchaus erwünscht, für die mechanische Stabilität des Kastens aber sehr unerwünscht ist.

Gemäß der Erfindung ist das Profil auf der Kasteninnenwand im Bereich der Filmabstreifer in das Kasteninnere hinein gewölbt, wodurch sich eine Verringerung des dem Kühlmittelstrom zur Verfügung stehenden Innenquerschnittes des Kastens ergibt. Jedoch ist die "vordere Böschung" (d.h. die dem Flüssigkeitsstrom zugewandte Seite des nach Innen gewölbten Profils der Kasten-Innenflächen) als senkrecht zum Flüssigkeitsstrom stehende Prallfläche Pf ausgebildet (Fig. 11). Selbst wenn diese senkrecht zur Längsrichtung verlaufende Prallfläche Pf nur verhältnismäßig schmal ist, führt der Kühlmittelstrom dort zu einem Abriß des Filmes F und die dabei entstehenden Tröpfchen TR erhalten an der Prallfläche Pf eine erhöhte Geschwindigkeitskomponente in Richtung des Pfeiles Tr′.

Während auf der dem Kühlmittelstrom abgewandten Böschung des Profils der Dampf in Richtung des Pfeiles Dp′ abgelenkt wird, werden die Tröpfchen TR weiter in das Kasteninnere geschleudert, so daß es am Filmabstreifer zu einer wirksamen Trennung von Dampf und Tröpfchen kommt.

Derartige Filmabstreifer sind vor allem im oberen Teil des Brennelementes, wo es zur Dampfbildung kommt, also etwa im Bereich des oberen Drittels der Brennstäbe, vorgesehen.

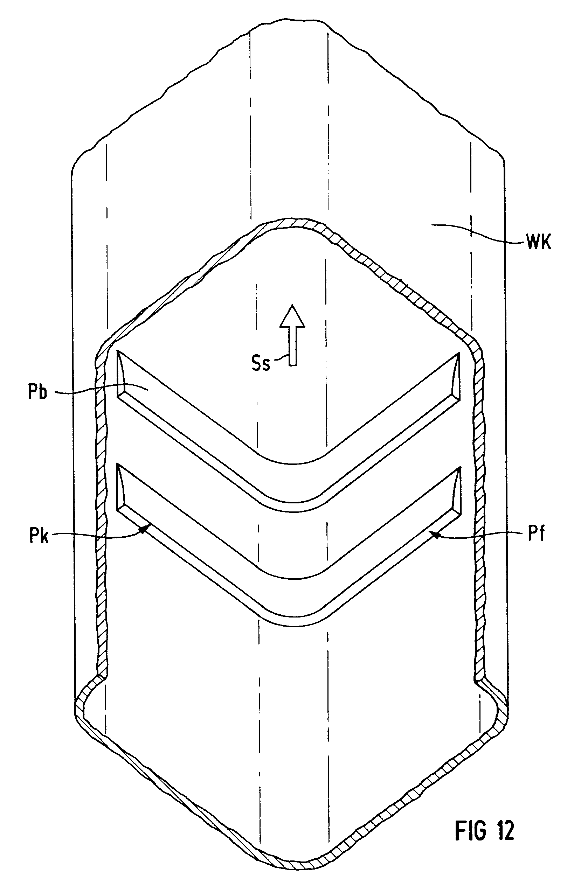

Dabei ist es nicht erforderlich, daß die abgewandte Böschung genauso eben ist, wie im Schema der Fig. 11 dargestellt. Fig. 12 zeigt, daß die als Prallfläche Pf ausgeführte Böschung um den gesamten Innenquerschnitt des Brennelementkastens WK umlaufen kann. Die abgewandte, "hintere" Böschung Pb, an der sich der vorübergehend verengte Strömungsquerschnitt wieder erweitert, kann bauchig ausgeführt sein, wobei lediglich vorteilhaft ist, daß der Übergang beider Böschungen eine möglichst wenig abgerundete, sondern scharfe (z.B. rechtwinklige oder spitze) Kante Pk bildet. Dadurch wird der Abriß der Strömung unterstützt und die senkrechte Strömungskomponente Tr′ der Tröpfchen verstärkt.

Im einzelnen kann die Ausführung des Filmabstreifers nach den Bedürfnissen einer rationellen Fertigung variiert werden. So kann der Brennelementkasten der Fig. 12 mit entsprechenden, nach innen gerichteten Wölbungen als Halb-Fertigteil gefertigt und die Prallfläche Pf mit der Prallkante Pk durch anschließende mechanische Überarbeitung erzeugt werden.

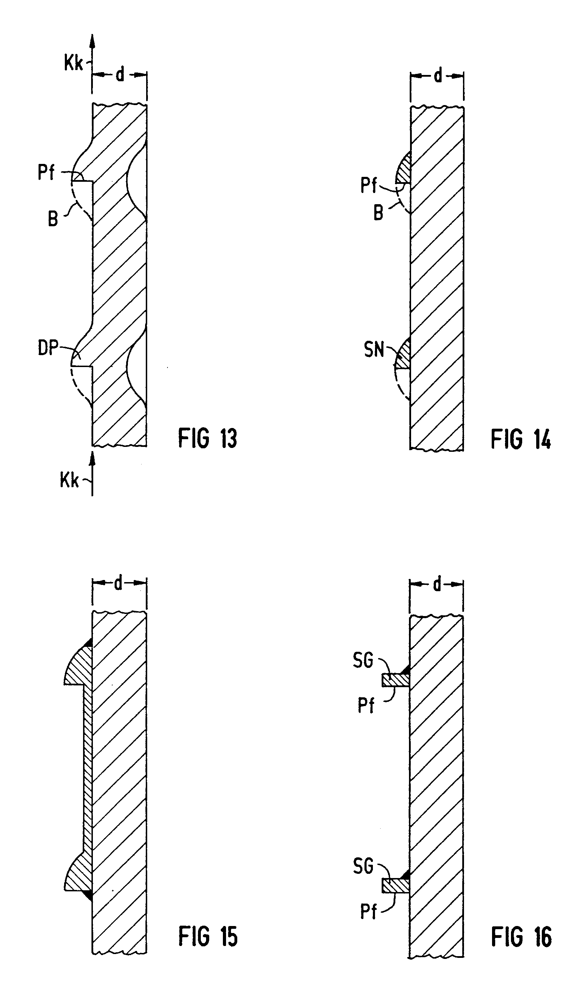

So kann z.B. auch zunächst ein Kasten erzeugt werden, dessen für die Filmabstreifer vorgesehene Wandteile im wesentlichen konstante Dicke besitzen. Die Wölbungen sind erzeugt, indem diese Wandteile gebogen werden, wobei die Prallflächen nachträglich eingearbeitet werden, indem an den in Fig. 13 gezeigten, dem Kühlmittelstrom zugewandten Böschungen B das überschüssige Wandmaterial abgetragen wird. Die durch die Biegungen entstandenen Noppen (Dimpel DP) können bei einem Kasten mit quadratischem Querschnitt und abgerundeten Ecken, wie er sich als vorteilhaft erwiesen hat, um den gesamten quadratischen Querschnitt verlaufen, es kann aber je nach Fertigung auch der Bereich der Rundungen ausgespart werden.

Die die Noppen tragenden Wandteile besitzen in Fig. 13 praktisch die konstante Dicke d, die lediglich an der der Strömungsrichtung zugewandten Seite durch das Einarbeiten der Prallfläche verringert ist. Diese verringerte Wandstärke stellt jedoch für die mechanische Stabilität, z.B. ein störendes Ausbeulen des Kastens aufgrund eines Druckunterschiedes zwischen dem Kasten inneren und dem Kasten äußeren, kaum eine Beeinträchtigung dar, da einerseits bereits eine geringe Materialabtragung zu einem Verwirbeln des Flüssigkeitsfilmes führt, andererseits die Wand an diesen Stellen durch die nach Innen gerichtete Biegung ohnehin eine erhöhte mechanische Stabilität aufweist.

Bei der Anordnung nach Fig. 14 ist auf die entsprechenden Wandteile der konstanten Dicke d zusätzliches Wandmaterial aufgetragen. Dies geschieht am einfachsten durch Aufschweißen, wobei hier das zusätzliche Wandmaterial selbst aus Schweißmaterial besteht. In diesem Fall sind also auf der Innenseite des Kastens querverlaufende Auftrags-Schweißnähte SN aufgebracht, wobei die störenden Böschungen B durch mechanische Bearbeitung abgetragen und die entsprechenden Prallflächen Pf gebildet sind. In Fig. 15 sind als zusätzliches Wandmaterial Verstärkungsbleche WB auf die Wandteile konstanter Dicke aufgeschweißt, wobei die Wölbungen durch Verdickungen der Verstärkungsbleche gebildet sind.

Nach Fig. 16 können als zusätzliches Wandmaterial auch Stege SG senkrecht auf der Wand, also senkrecht zur Fluchtlinie, angeschweißt werden.

Das zusätzlich aufgebrachte Wandmaterial führt dabei auch zu einer Verstärkung des Kastens, dessen Wandstärke daher an sich verhältnismäßig gering gewählt sein kann. Um trotz einer derartigen, geringen Wandstärke dem gesamten Kasten eine ausreichende Steifheit zu verleihen, können die in den Figuren 6 bis 8 vorgesehenen Verstärkungsbleche VW und VW′ vorgesehen sein. Außerdem können zur Verbesserung des Neutronenflusses auch die in den Figuren 3 bis 5 erwähnten Wasserstäbe und Kanäle vorteilhaft sein. Dabei können auch derartige Innenwände, die sich zwischen den Brennstäben parallel zur Kastenwand erstrecken, mit senkrecht zur Strömungsrichtung verlaufenden Prallflächen versehen werden. Diese zusätzlichen Prallflächen an den Innenwänden können gemäß den Figuren 13 bis 15 ausgebildet sein. Sollten sich für Prallflächen, die in das Kasteninnere hineinragen und den Strömungsquerschnitt verringern würden, Schwierigkeiten wegen eines erhöhten Druckabfalls und/oder des zur Verfügung stehenden Raumes ergeben, so können für diese Innenflächen Filmabstreifer vorgesehen werden, wie sie in Fig. 10 dargestellt sind.

In jedem Fall sind die Filmabstreifer am wirkungsvollsten, wenn sie in Strömungsrichtung vor entsprechenden Abstandshaltern eingeordnet sind, wie die Fig. 11 zeigt.

## Patentansprüche

1. Brennelement (BE) für einen Siedewasserreaktor, mit parallel zueinander angeordneten, Kernbrennstoff enthaltenden Brennstäben (ST), die in einem langgestreckten Kasten (WK) zwischen einem Fußteil (Ft) mit in den Kasten-Innenraum mündenden Eintrittsöffnungen für strömendes Kühlmittel und einem Kopfteil (K) mit aus dem Kasteninnenraum herausführenden Austrittsöffnungen (O) für das strömende Kühlmittel angeordnet sind, wobei die Innenflächen des Kastens (WK) in Strömungsrichtung ein Profil mit einer sich geradlinig erstreckende Fluchtlinie (Kk-Kk) und quer dazu verlaufenden Filmabstreifern aufweisen,
**dadurch gekennzeichnet,** daß die Filmabstreifer als in Strömungsrichtung des Kühlmittels hineinragende Wölbungen mit einer zur Strömungsrichtung senkrechten Prallfläche (Pf) auf ihrer dem Kühlmittel zugewandten Böschung ausgebildet sind.

2. Brennelement nach Anspruch 1, **dadurch gekennzeichnet,** daß die Wölbungen von Biegungen in Kastenwand-Teilen mit im wesentlichen konstanter Wanddicke gebildet und die Prallflächen durch Materialabtragung an den dem Kühlmittelstrom zugewandten Böschungen der Wölbungen erzeugt sind.

3. Brennelement nach Anspruch 1, **dadurch gekennzeichnet,** daß die Wölbungen durch Auftragen von zusätzlichem Wandmaterial auf Kastenwand-Teilen mit im wesentlichen konstanter Dicke gebildet sind.

4. Brennelement nach Anspruch 3, **dadurch gekennzeichnet,** daß das zusätzliche Wandmaterial durch Aufschweißen aufgebracht ist.

5. Brennelement nach Anspruch 4, **dadurch gekennzeichnet,** daß das zusätzliche Wandmaterial aus Schweißmaterial besteht und die Prallflächen durch mechanisches Abtragen des Schweißmaterials gebildet sind.

6. Brennelement nach Anspruch 3, **dadurch gekennzeichnet,** daß als zusätzliches Wandmaterial Verstärkungsbleche auf die Wandteile konstanter Dicke aufgeschweißt sind und die Wölbungen und Prallflächen von dem Profil der Verstärkungsbleche gebildet sind.

7. Brennelement nach Anspruch 3, **dadurch gekennzeichnet,** daß als zusätzliches Wandmaterial auf der Fluchtlinie senkrecht stehende Stege auf der Innenfläche des Kastens aufgesetzt sind.

8. Brennelement nach einen der Ansprüche 1 bis 7, **dadurch gekennzeichnet,** daß die Wölbungen nur im oberen Teil des Kastens angebracht sind.

9. Brennelement nach einen der Ansprüche 1 bis 8, **dadurch gekennzeichnet,** daß die Wölbungen jeweils in Strömungsrichtung vor einem Abstandhalter mit sich senkrecht zur Längsachse zwischen den Brennstäben erstrecken den Stegen angebracht sind.

10. Brennelement nach einem der Ansprüche 1 bis 9, **dadurch gekennzeichnet,** daß im Kasteninnenraum Innenwände mit senkrecht zur Strömungsrichtung sich erstreckenden Prallflächen angebracht sind.

## Claims

1. A fuel element (BE) for a boiling water reactor, having fuel rods (ST), arranged parallel reLative to each other and containing nuclear fuel, which are arranged in an elongated box (WK) between a base part (Ft) having inlet openings opening into the box interior, for flowing coolant, and a head part (K) having outlet openings (O) Leading out of the box interior for flowing coolant, wherein the inner surfaces of the box (WK) have a profile with an alignment (Kk-Kk) extending in a straight line in the direction of flow and film strippers extending transverse thereto, characterised in that the film strippers are formed as bulges projecting in the flow direction of the coolant with an impact surface (Pf) perpendicular to the flow direction provided on the slope facing the coolant.

2. A fuel element according to claim 1, characterised in that the bulges are formed from deflections in box wall parts with a substantially constant wall thickness, and the impact surfaces are produced by removal of material from the slopes of the bulges facing the flow of the coolant.

3. A fuel element according to claim 1, characterised in that the bulges are formed by applying additional wall material to the box wall parts with a substantially constant thickness.

4. A fuel element according to claim 3, characterised in that the additional wall material is applied by welding.

5. A fuel element according to claim 4, characterised in that the additional wall material consists of welding material and the impact surfaces are formed by mechanical removal of the welding material.

6. A fuel element according to claim 3, characterised in that reinforcing sheets of metal as additional wall material are welded onto the wall parts of constant thickness and the bulges and impact surfaces are formed by the profile of the reinforcing sheets.

7. A fuel element according to claim 3, characterised in that bars standing perpendicular to the line of alignment are placed on the inner surface of the box as additional wall material.

8. A fuel element according to one of claims 1 to 7, characterised in that the bulges are disposed only in the upper part of the box.

9. A fuel element according to one of claims 1 to 8, characterised in that the bulges are each disposed in the flow direction in front of a spacer with bars extending perpendicular to the longitudinal axis between the fuel rods.

10. A fuel element according to one of claims 1 to 9, characterised in that disposed in the box interior there are inner walls with impact surfaces extending perpendicular to the flow direction.

## Revendications

1. Assemblage combustible (BE) de réacteur à eau bouillante, comprenant des crayons combustibles (ST) qui sont disposés parallèlement les uns aux autres, qui contiennent de la matière combustible nucléaire et qui sont disposés dans un boîtier (WK) oblong, entre un pied (FT) ayant des orifices d'entrée d'un agent de refroidissement en écoulement débouchant à l'intérieur du boîtier, et une tête (K) ayant des orifices (O) de sortie de l'intérieur du boîtier, les faces intérieures du boîtier (WK) ayant, dans la direction de l'écoulement, un profil comportant une ligne de fuite (KK) rectiligne et des dispositifs de détachement de film s'étendant transversalement à cette ligne, caractérisé en ce que les dispositifs de détachement de film sont sous la forme de parties voûtées faisant saillie dans la direction d'écoulement de l'agent de refroidissement et ayant une surface de rebondissement (Pf) perpendiculaire à la direction d'écoulement sur leur dos tourné vers l'agent de refroidissement.

2. Assemblage combustible suivant la revendication 1, caractérisé en ce que les parties voûtées sont formées par des courbures dans des parties de la paroi du boitier ayant une épaisseur de paroi sensiblement constante et des surfaces de rebondissements sont produites par enlèvement de matière sur les dos des courbures qui sont tournées vers le courant d'agent de refroidissement.

3. Assemblage combustible suivant la revendication 1, caractérisé en ce que les parties voûtées sont formées par dépôt de matériau de paroi supplémentaire sur des parties de paroi de boitier d'épaisseur sensiblement constante.

4. Assemblage combustible suivant la revendication 3, caractérisé en ce que le matériau supplémentaire de paroi est déposé par soudage.

5. Assemblage combustible suivant la revendication 4, caractérisé en ce que le matériau supplémentaire de paroi est constitué de matériau de soudure et les surfaces de rebondissement sont formées par enlèvement mécanique du matériau de soudure.

6. Assemblage combustible suivant la revendication 3, caractérisé en ce que des tôles de renforcement sont appliquées par soudage en tant que matériau supplémentaire de paroi sur les parties de paroi d'épaisseur constante et les parties voûtées et les surfaces de rebondissement sont formées par le profil des tôles de renforcement.

7. Assemblage combustible suivant la revendication 3, caractérisé en ce que des réglettes perpendiculaires à la ligne de fuite sont posées en tant que matériau supplémentaire de paroi sur la face intérieure du boîtier.

8. Assemblage combustible suivant l'une des revendications 1 à 7, caractérisé en ce que les parties voûtées ne sont prévues que dans la partie supérieure du boîtier.

9. Assemblage combustible suivant l'une des revendications 1 à 8, caractérisé en ce que les parties voûtées sont prévues respectivement dans la direction de l'écoulement en amont d'une entretoise ayant des parties pleines s'étendant perpendiculairement à l'axe longitudinal entre les crayons combustibles.

10. Assemblage combustible suivant l'une des revendications 1 à 9, caractérisé en ce que des parois intérieures à l'intérieur du boîtier sont munies de surfaces de rebondissement s'étendant perpendiculairement à la direction d'écoulement.
